# DEMANDE DE BREVET EUROPEEN

(11) **EP 2 680 185 A1**
(43) Date de publication de la demande: **01.01.2014**
(21) Numéro de dépôt: 13174343.7
(22) Date de dépôt: 28.06.2013
(51) Int. Cl.: G06F 21/86

(54) **Dispositif électronique**

(30) Priorité: 29.06.2012 FR 1201844
(71) Demandeur: Thales, 92200 Neuilly Sur Seine (FR)
(72) Inventeur: Lemahieu, Steeve, 92622 Gennevilliers Cedex (FR); Duchossoy, Marc, 92622 Gennevilliers Cedex (FR); Tissier, Victor, 92622 Gennevilliers Cedex (FR)
(74) Mandataire: Esselin, Sophie

(57) **Abrégé**

Dispositif électronique caractérisé en ce qu'il comporte un premier ensemble d'au moins une première couche comprenant un diélectrique, la première couche comportant au moins une première piste de cuivre en forme de serpentin. Le dispositif comprend aussi un deuxième ensemble d'au moins une deuxième couche comprenant un diélectrique comprenant de la fibre de verre et de la résine, ladite deuxième couche comportant au moins une deuxième piste de cuivre en forme de serpentin. De plus le dispositif comprend un troisième ensemble d'au moins une troisième couche comprenant un diélectrique comprenant de la fibre de verre et de la résine, l'une au moins des troisièmes couches intégrant un quatrième ensemble d'au moins un composant à protéger et l'une au moins des troisièmes couches intégrant un cinquième ensemble d'au moins un composant adapté pour détecter une rupture d'une des pistes et effacer les données mémorisées dans les composants du quatrième ensemble et/ou détruire tout ou partie des composants du quatrième ensemble lors de la détection de ladite rupture.

## Description

La présente invention concerne un dispositif électronique permettant la protection de données stockées dans certains composants du dispositif ou les secrets de fabrication de certains composants du dispositif.

Il est connu dans l'état de la technique d'intégrer ou enfouir ces composants à protéger directement dans le circuit imprimé ou « PCB » pour « Printed Circuit Bord » en anglais. Ce circuit imprimé est généralement réalisé dans un matériau de type diélectrique à base de fibres de verre reliées avec de la résine.

Il est également connu d'ajouter un dispositif de protection au dessus des composants à protéger. Ce dispositif permet de détecter une éventuelle intrusion. Cette intrusion peut avoir pour but de récupérer des données stockées dans des composants ou de découvrir des secrets de fabrication de ces composants. Cette intrusion est généralement réalisée par perçage au moyen de procédés mécaniques ou chimiques.

Ces deux dispositifs de l'état de la technique présentent plusieurs inconvénients. Le premier dispositif ne permet pas de détecter une intrusion et ne permet donc pas de réagir à cette intrusion. Le deuxième dispositif est visible à l'oeil nu sans outils spécifiques. L'attaquant peut donc déterminer où sont localisés les composants à protéger et trouver une manière de contourner la protection.

Le document US 2007/017736 divulgue un dispositif comportant trois substrats de circuit imprimé superposés. Le substrat central porte, montés sur sa surface, un composant éléctronique à protéger et un composant de protection. Les substrats supérieurs et inférieur portent des maillages conducteurs. Une tentative d'intrusion provoque des interruptions de continuité électrique desdits maillages conducteurs, qui est détectée par le composant de protection. Une telle solution est encombrante et n'exclut pas totalement la possibilité qu'une intrusion, en particulier latérale (sur la tranche du dispositif) puisse ne pas être détectée.

La présente invention vise donc à remédier à ces problèmes en proposant un dispositif électronique, permettant de protéger certains composants, qui n'est pas détectable à l'oeil nu, qui permet de détecter un perçage d'un diamètre inférieur à 600µm et dont le surcoût est faible.

Ainsi il est proposé, selon un aspect de l'invention, un dispositif électronique qui comporte un premier ensemble d'au moins une première couche comprenant un diélectrique. Cette première couche comporte au moins une première piste de cuivre en forme de serpentin. Le dispositif comporte aussi un deuxième ensemble d'au moins une deuxième couche comprenant un diélectrique comprenant de la fibre de verre et de la résine. La deuxième couche comporte au moins une deuxième piste de cuivre en forme de serpentin. Le dispositif comporte de plus un troisième ensemble d'au moins une troisième couche comprenant un diélectrique comprenant de la fibre de verre et de la résine. Parmi ces troisièmes couches l'une au moins intègre un quatrième ensemble d'au moins un composant à protéger et l'une au moins intègre un cinquième ensemble d'au moins un composant. Ce ou ces composants du cinquième ensemble sont adaptés pour détecter une rupture d'une des premières pistes de cuivre ou d'une des deuxièmes pistes de cuivre. De plus ce ou ces composants du cinquième ensemble sont adaptés pour effacer tout ou partie des données mémorisées dans tout ou partie des composants du quatrième ensemble et/ou pour détruire tout ou partie des composants du quatrième ensemble lors de la détection de la rupture. Le troisième ensemble est placé entre le premier ensemble et le deuxième ensemble. De plus, le dispositif comporte au moins une connexion électrique entre une des troisièmes couches et une des premières couches. Cette connexion électrique permet la continuité électrique entre une piste de cuivre de la troisième couche et une piste de cuivre de la première couche. Il comporte également au moins une connexion électrique entre une des troisièmes couches et une des deuxièmes couches. Cette connexion électrique permet la continuité électrique entre une piste de cuivre de la deuxième couche et une piste de cuivre de la première couche.

Avantageusement, les différentes couches et ensembles de couches forment un seul et unique substrat de circuit imprimé (PCB) mutlicouches. Avantageusement, les connexions électriques entre couches sont réalisés au moyen de trous métallisés (VIAs). Cela permet d'obtenir un montage très compact et solide, minimisant le risque qu'une tentative d'intrusion puisse ne pas être détectée. Cela est particulièrement vrai lorsque les composant du quatrième et/ou du cinquième ensemble sont des puces, de préférence nues, enfuies dans le substrat multicouche unique.

Le dispositif proposé permet donc de détecter une intrusion dont le but est de récupérer les données de certains composants ou de découvrir les secrets de fabrication de certains composants. Suite à cette détection le dispositif permet d'effacer les données des composants et/ou de détruire les composants afin d'empêcher la découverte des secrets de fabrication. La gravure des pistes de cuivre est comprise entre 25µm et 250µm avec une valeur préférentielle de 50µm. L'espace entre les pistes est compris entre 25µm et 250µm avec une valeur préférentielle de 50µm. Ceci permet de détecter un perçage d'un diamètre supérieur à une valeur comprise entre 75µm et 750µm. De plus, comme la protection est intégrée directement dans le circuit imprimé, elle est indétectable en effectuant un examen visuel sans outil. Le dispositif est également de faible coût. En effet, l'ajout dans le circuit imprimé des différents moyens servant à la protection est simple et n'engendre pas de surcoûts importants. Les connexions électriques peuvent être réalisées par des trous métallisés qui sont également connus sous l'expression anglaise « VIA » pour « Vertical Interception Access ».

Avantageusement le diélectrique comprend de la fibre de verre et de la résine.

Avantageusement le diélectrique comprend du polyimide.

Un polyimide est un polymère coloré (souvent ambré) qui comportent des groupes imides dans sa chaîne principale.

Avantageusement, le premier ensemble comporte au moins deux premières couches et au moins une connexion électrique permettant la continuité électrique entre des pistes de cuivre appartenant à des premières couches différentes. De même, le deuxième ensemble comporte au moins deux deuxièmes couches et au moins une connexion électrique permettant la continuité électrique entre des pistes de cuivre appartenant à des deuxièmes couches différentes. Enfin, le troisième ensemble comporte au moins deux troisièmes couches et au moins une connexion électrique permettant la continuité électrique entre des pistes des troisièmes couches différentes.

Selon une caractéristique technique, le dispositif comporte également des moyens de stockage d'énergie. Cette énergie est utilisée pour alimenter tout ou partie des composants du cinquième ensemble et éventuellement du quatrième ensemble.

Ceci permet de rendre le système de protection totalement autonome et d'assurer la protection des données ou des secrets de fabrication même lorsque l'alimentation externe en énergie du dispositif est coupée.

Selon une caractéristique technique le dispositif comporte également au moins une connexion électrique (de préférence réalisée par des trous métallisés) traversant tout ou partie des couches du premier, deuxième et/ou troisième ensemble et entourant ledit quatrième ensemble d'au moins un composant à protéger. Ce ou ces connexions électriques présentent une continuité électrique dont la rupture est détectable par au moins un des composants du cinquième ensemble.

Ceci permet de détecter des intrusions ayant lieu par le coté du dispositif.

Avantageusement, les deux surfaces extrêmes du dispositif sont adaptées pour recevoir au moins un sixième ensemble d'au moins un composant

Avantageusement, le premier ensemble comporte trois premières couches, le deuxième ensemble comporte trois deuxièmes couches et le troisième ensemble comporte six troisièmes couches.

Selon une caractéristique technique, la ou les premières pistes de cuivre et la ou les deuxièmes pistes de cuivre sont obtenues par gravure et ont une largeur inférieure à un premier seuil et un espace entre deux pistes de cuivre voisines inférieur à un deuxième seuil.

La valeur du premier seuil est comprise entre 25µm et 250µm avec une valeur préférentielle de 50µm. La valeur du deuxième seuil est comprise entre 25µm et 250µm avec une valeur préférentielle de 50µm. Ceci permet de détecter un perçage d'un diamètre supérieur à 75µm à 750µm.

L'invention sera mieux comprise et d'autres avantages apparaîtront à la lecture de la description détaillée faite à titre d'exemple non limitatif et à l'aide des figures parmi lesquelles :
- la figure 1 présente le dispositif selon un premier aspect de l'invention
- la figure 2 présente une géométrie des premières ou deuxièmes pistes de cuivre
- la figure 3 présente le dispositif selon un deuxième aspect de l'invention
- la figure 4 présente le dispositif selon un troisième aspect de l'invention

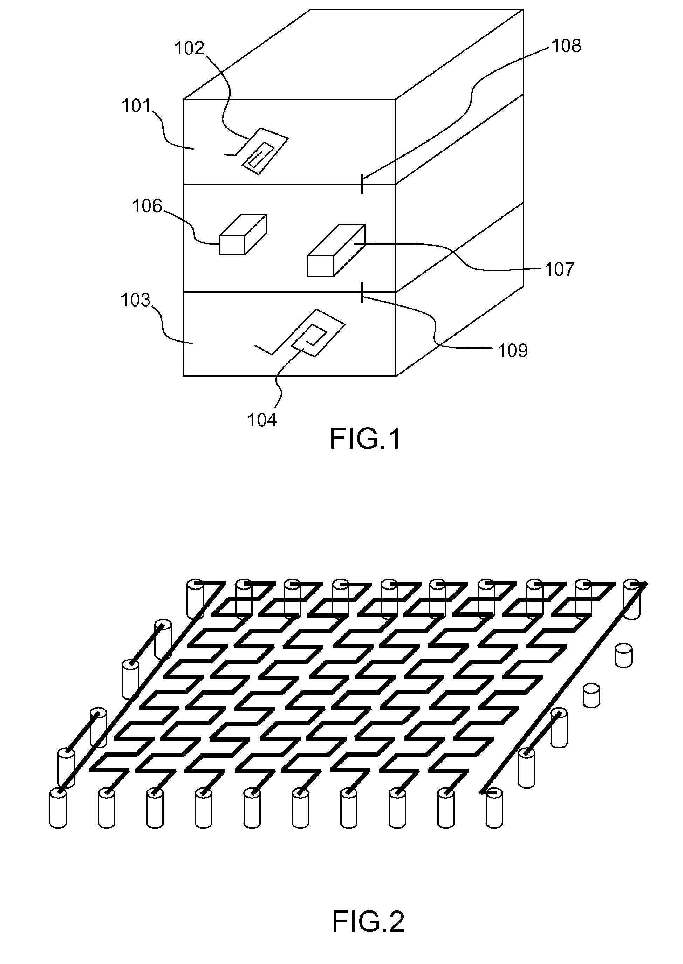

Le dispositif tel que présenté figure 1 comporte un premier ensemble 101 de couches constituées d'un diélectrique. Ce diélectrique est formé de fibres de verre reliées avec de la résine ou de polyimide. Ce type de diélectrique est aussi connu sous le nom de « FR4 » pour « Flame Resistant 4 » en anglais. Ce premier ensemble comporte de plus une première piste de cuivre 102 en forme de serpentin. Le dispositif comporte également un deuxième ensemble 103 de couches constituées du même diélectrique. Ce deuxième ensemble comporte également une deuxième piste de cuivre 104 en forme de serpentin. Le dispositif comporte aussi un troisième ensemble 105 de couches constituées du même diélectrique. Une ou plusieurs couches de ce troisième ensemble comporte un quatrième ensemble 106 d'au moins un composant à protéger. De plus une ou plusieurs couches de ce troisième ensemble comporte un cinquième ensemble 107 d'au moins un composant servant à implémenter le processus de protection. Les composants de ce cinquième ensemble permettent de détecter la rupture d'une des premières pistes de cuivre 102 ou d'une des deuxièmes pistes de cuivre 103. De plus, lors de la détection d'une rupture, les composants du cinquième ensemble permettent l'effacement de tout ou partie des données mémorisées dans tout ou partie des composants du quatrième ensemble et/ou la destruction de tout ou partie des composants du quatrième ensemble. Afin d'effectuer correctement cette détection, les premières et deuxièmes pistes de cuivre doivent présenter une géométrie laissant le moins possible de trous. Un exemple de cette géométrie est présentée figure 2. Sur cette exemple les pistes de cuivre sont en forme de créneaux, il est cependant possible d'utiliser dans le dispositif d'autres géométries des pistes de cuivre. De plus une connexion électrique 108 permet de relier électriquement des pistes de cuivre d'une des premières couches à des pistes de cuivre d'une des troisièmes couches. De même, une connexion électrique 109 permet de relier électriquement des pistes de cuivre d'une des deuxièmes couches à des pistes de cuivre d'une des troisièmes couches. Ces connexions électriques permettent donc aux composants du cinquième ensemble de détecter une rupture sur les premières et deuxièmes pistes de cuivre en forme de serpentin. La destruction des composants du quatrième ensemble peut être réalisée par l'utilisation de fusibles électroniques qui, une fois activés, sont rendus non conducteurs et empêchent ainsi d'avoir accès au composant électronique à protéger en le rendant inutilisable. Il existe également des explosifs (dont la dose de poudre est dosée au mg près) qui permettent de détruire un composant. Les composants du cinquième ensemble sont par exemple des microcontrôleurs à très basse consommation, mais également des composants servant à la destruction des composants ou à l'effacement des données sensibles.

Il est aussi possible d'implanter le stockage des données sensibles directement dans le ou les microcontrôleurs du cinquième ensemble 107 afin d'optimiser le dispositif et de limiter le nombre de composants utilisés.

Dans certain cas, il est nécessaire que le dispositif de protection fonctionne même lorsqu'il n'est pas alimenté en énergie. C'est par exemple le cas si le dispositif est implémenté dans un équipement dont les données ou les secrets de fabrication doivent être protégés même lorsque l'alimentation de l'équipement est coupée. Dans ce cas, il est nécessaire que le dispositif comporte une réserve d'énergie. Cette énergie est ensuite utilisée pour l'alimentation des composants du cinquième ensemble 107 et éventuellement du quatrième ensemble 106. Il est possible que cette réserve d'énergie soit intégrée dans une ou plusieurs couches du troisième ensemble. Il est également possible d'avoir une réserve d'énergie divisée en deux parties. Une première partie est composée d'une pile ou d'un accumulateur rechargeable. Cette première partie est située en surface du dispositif. Une deuxième partie est composée d'un accumulateur rechargeable ou d'une capacité. Cette deuxième partie est située dans une des couches du troisième ensemble. Les éléments de ces deux parties peuvent être reliés par un ou plusieurs connexions électriques.

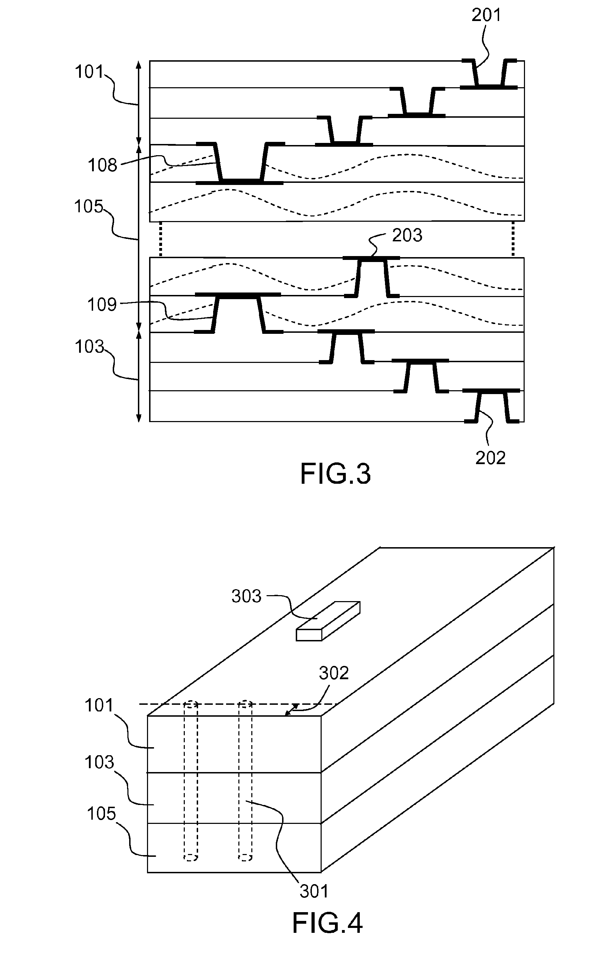

Le dispositif tel que représenté figure 3 possède un ou plusieurs connexions électriques qui permettent de relier les pistes de cuivre de deux couches d'un même ensemble de couches. Ainsi sur le dispositif représenté sur la figure 2, le premier ensemble 101 comporte trois premières couches et une connexion électrique 201 qui permet la continuité électrique entre des pistes de cuivre appartenant à des premières couches différentes. De même le dispositif comporte un deuxième ensemble de trois deuxièmes couches et une connexion électrique 202 qui permet la continuité électrique entre des pistes de cuivre appartenant à des deuxièmes couches différentes. Enfin le troisième ensemble 105 du dispositif comporte six troisièmes couches et une connexion électrique 203 qui permet la continuité électrique entre des pistes appartenant à des troisièmes couches différentes.

De préférence toutes les couches du dispositif sont interconnectées électriquement par des trous métallisés (vias) et forment un seul et unique circuit imprimé. En outre, de préférence, le ou les composants de protection 107 et/ou le ou les composants électroniques à protéger sont des puces nues enfuies dans ledit circuit imprimé.

La figure 4 représente un dispositif qui comporte également des connexions électriques 301. Ces connexions traversent tout ou partie des couches du premier, deuxième ou troisième ensemble. Ces connexions sont placées au bord du dispositif, et s'ils sont réalisés par des trous métallisés ces trous ont un diamètre de 50µm à 1000µm avec une valeur préférentielle de 100µm et sont espacés de 100µm à 1000µm avec une valeur préférentielle de 200µm. Ces connexions sont reliées aux composants du cinquième ensemble 107 en utilisant par exemple des pistes de cuivre mais également d'autres connexions électriques. Ces composants peuvent donc détecter une rupture dans la continuité électrique. Ces connexions permettent en particulier d'éviter que le dispositif puisse détecter une attaque réalisée par le côté.

Le dispositif représenté figure 4 comporte aussi en surface un sixième ensemble 303 de composants.

## Revendications

1. Dispositif électronique **caractérisé en ce qu'il** comporte
- un premier ensemble (101) d'au moins une première couche comprenant un diélectrique, ladite première couche comportant au moins une première piste de cuivre (102) en forme de serpentin ;
- un deuxième ensemble (103) d'au moins une deuxième couche comprenant un diélectrique comprenant de la fibre de verre et de la résine, ladite deuxième couche comportant au moins une deuxième piste de cuivre (104) en forme de serpentin
- un troisième ensemble (105) d'au moins une troisième couche comprenant un diélectrique comprenant de la fibre de verre et de la résine, l'une au moins desdites troisièmes couches intégrant un quatrième ensemble (106) d'au moins un composant à protéger et l'une au moins desdites troisièmes couches intégrant un cinquième ensemble (107) d'au moins un composant adapté pour :
- détecter une rupture d'une desdites premières pistes de cuivre (102) ou d'une desdites deuxièmes pistes de cuivre (103); et
- effacer tout ou partie des données mémorisées dans tout ou partie des composants du quatrième ensemble et/ou détruire tout ou partie des composants du quatrième ensemble lors de la détection de ladite rupture ;
ledit troisième ensemble étant placé entre ledit premier ensemble et ledit deuxième ensemble ;
ledit dispositif comportant au moins un trou métallisé réalisant une connexion électrique (108) entre une des troisièmes couches et une des premières couches permettant la continuité électrique entre une piste de cuivre de la troisième couche et une piste de cuivre de la première couche et au moins un trou métallisé réalisant une connexion électrique (109) entre une des troisièmes couches et une des deuxièmes couches permettant la continuité électrique entre une piste de cuivre de la deuxième couche et une piste de cuivre de la première couche.

2. Dispositif électronique selon la revendication 1 dans lequel ledit diélectrique comprend de la fibre de verre et de la résine.

3. Dispositif électronique selon la revendication 1 dans lequel ledit diélectrique comprend un polyimide.

4. Dispositif électronique selon l'une des revendications 1 à 3 dans lequel ;
- le premier ensemble (101) comporte au moins deux premières couches et au moins un trou métallisé réalisant une connexion électrique (201) permettant la continuité électrique entre des pistes de cuivre appartenant à des premières couches différentes et/ou;
- le deuxième ensemble (103) comporte au moins deux deuxièmes couches et au moins un trou métallisé réalisant une connexion électrique (202) permettant la continuité électrique entre des pistes de cuivre appartenant à des deuxièmes couches différentes;
- ledit troisième ensemble (105) comporte au moins deux troisièmes couches et au moins un trou métallisé réalisant une connexion électrique (203) permettant la continuité électrique entre des pistes des troisièmes couches différentes.

5. Dispositif selon l'une des revendications 1 à 4 dans lequel des moyens de stockage d'énergie sont intégrés dans le dispositif, ladite énergie étant utilisée pour alimenter tout ou partie des composants dudit cinquième ensemble (107).

6. Dispositif selon l'une des revendications précédentes comportant également une pluralité de trous métallisés réalisant des connexions électriques (301) traversant tout ou partie des couches des premiers, deuxièmes et/ou troisièmes ensemble et entourant ledit quatrième ensemble d'au moins un composant à protéger, lesdites connexions électrique présentant une continuité électrique dont la rupture est détectable par au moins un des composants du cinquième ensemble (107).

7. Dispositif selon l'une des revendications précédentes dans lequel les deux surfaces extrêmes du dispositif sont adaptées pour recevoir au moins un sixième ensemble (303) d'au moins un composant

8. Dispositif selon l'une des revendications précédentes dans lequel ledit premier ensemble comporte trois premières couches, ledit deuxième ensemble comporte trois deuxièmes couches et ledit troisième ensemble comporte six troisièmes couches.

9. Dispositif selon l'une des revendications précédentes dans lequel ladite première piste de cuivre et ladite deuxième piste de cuivre sont obtenues par gravure, ont une épaisseur inférieure à un premier seuil et ont un espace entre deux pistes de cuivre voisines inférieur à un deuxième seuil.

10. Dispositif selon l'une des revendications précédentes dans lequel ladite première piste et/ou ladite deuxième piste de cuivre sont en forme de serpentin comportant une pluralité de créneaux.

11. Dispositif selon l'une des revendications précédentes dans lequel lesdits premier, deuxième et troisième ensemble de couches forment un seul et unique substrat de circuit imprimé.

12. Dispositif selon la revendication 11 dans lequel ledit quatrième ensemble d'au moins un composant à protéger comprend au moins une puce nue, enfuie dans ledit substrat de circuit imprimé.
